# EUROPÄISCHE PATENTANMELDUNG

(11) **EP 4 186 670 A1**
(43) Veröffentlichungstag der Anmeldung: **31.05.2023**
(21) Anmeldenummer: 22215464.3
(22) Anmeldetag: 08.06.2022
(51) Int. Cl.: B29B 13/02, B29C 35/02, B29C 43/02, B29C 43/52, B29C 65/02, B65B 7/28, B65B 9/04, B65B 47/02, B65B 51/10, H05B 3/20, B29C 65/18, B29C 65/30, B29C 65/38, B29C 65/00, B65B 51/14, H05B 3/00

(54) **VERFAHREN ZUM HERSTELLEN EINES HEIZELEMENTS FÜR EINE ARBEITSSTATION FÜR FOLIENVERARBEITENDE VERPACKUNGSMASCHINE**

(30) Priorität: 14.06.2021 DE 102021115294; 10.11.2021 EP 21207350
(62) Teilanmeldung aus: 22177713.9
(71) Anmelder: MULTIVAC Sepp Haggenmüller SE & Co. KG, 87787 Wolfertschwenden (DE)
(72) Erfinder: NAPRAVNIK, Christian, 83026 Rosenheim (DE); WÄGELE, Markus, 87763 Lautrach (DE); REICHART, Nadine, 87541 Unterjoch/Bad Hindelang (DE); GROPPER, Daniel, 89257 Illertissen (DE); AMMANN, Christina, 87629 Füssen (DE)
(74) Vertreter: Grünecker Patent- und Rechtsanwälte PartG mbB

(57) **Zusammenfassung**

Eine Arbeitsstation (9, 15, 16, 17) für eine folienverarbeitende Verpackungsmaschine (2) definiert eine Folientransportebene (E), in der die Verpackungsfolie (5, 22) transportierbar ist. Zudem weist die Arbeitsstation (9, 15, 16 ,17) eine elektrisch betreibbare Heizungsanordnung (13) aufweist. Diese wiederum umfasst ein elektrisch leitfähiges, flächiges Widerstands-Heizelement (30), das in einer Ebene (E') parallel zur Folientransportebene (E) um einen Faktor von mindestens 5, vorzugsweise mindestens 10, größere Abmessungen hat als in einer Richtung (R) senkrecht zur Folientransportebene (E). Das Widerstands-Heizelement (30) ist zwischen einer Heizplatte (31) und einer Klemmplatte (32) angeordnet. Die Erfindung bezieht sich auch auf eine Verpackungsmaschine mit einer solchen Arbeitsstation sowie auf ein Verfahren zum Betrieb einer solchen Arbeitsstation.

## Beschreibung

Die Erfindung bezieht sich auf die Herstellung eines Heizelements für eine Arbeitsstation für eine folienverarbeitende Verpackungsmaschine.

Arbeitsstationen für folienverarbeitende Verpackungsmaschinen erfordern häufig eine Möglichkeit zum Erwärmen der Verpackungsfolie und verfügen zu diesem Zweck über eine Heizungsanordnung. Als elektrisch betreibbare Heizelemente werden typischerweise Rohrheizkörper oder Heizpatronen eingesetzt, wie beispielsweise in der EP 1 403 185 A1 für eine Vakuum-Kammermaschine beschrieben.

Während solche Rohrheizkörper in der Regel langlebig und zuverlässig sind, haben sie andererseits auch Nachteile. Unter anderem haben sie zusammen mit dem Gesamtwerkzeug eine vergleichsweise große thermische Trägheit, erfordern viel Bauraum, machen die Werkzeuge der Arbeitsstationen entsprechend groß und schwer und den Austausch der Werkzeuge arbeitsaufwendig.

Die DE 10 2011 110 973 A1 offenbart eine zuschneidbare Heizmatte unter Verwendung eines Carbon-Nanotube-Heizlacks, allerdings ohne Offenbarung einer Anwendung im Bereich der Verpackungstechnik. Weitere Heizvorrichtungen gehen aus der DE 10 2013 004 232 B4 (ebenfalls ohne Bezug zur Verpackungstechnik), der DE 10 2014 101 981 A1 (Maschine zum Einsatz in der Getränkeabfüll- oder Getränkeverpackungsindustrie), der DE 10 2017 000 439 A1 (beheizte Füllvorrichtung zum Abfüllen eines flüssigen oder pastösen Produktes), der DE 20 2011 104 749 U1 (Flächenheizsystem für Böden von Fahrzeugen) oder der WO 2007/089118 A1 hervor. Die EP 1 560 751 B1 offenbart ein Widerstandsheizelement für eine Verpackungsmaschine.

Die US 2006 / 289 110 A1 und die US 2006 / 289 472 A1 offenbaren jeweils Verfahren zur Herstellung mattenförmiger elektrischer Heizanordnungen. Diese Heizanordnungen haben jedoch nichts mit Verpackungstechnologie zu tun, sondern sind dimensioniert und konfiguriert zum Beheizen von Räumen in Gebäuden.

Die Aufgabe der vorliegenden Erfindung besteht darin, ein Herstellungsverfahren für ein Heizelement für eine Arbeitsstation einer folienverarbeitenden Verpackungsmaschine zur Verfügung zu stellen.

Diese Aufgabe wird gelöst durch ein Verfahren zum Herstellen eines elektrischen Heizelements mit den Merkmalen des Anspruchs 1. Vorteilhafte Weiterbildungen der Erfindung sind in den abhängigen Ansprüchen angegeben.

Die Arbeitsstation ist geeignet für eine folienverarbeitende Verpackungsmaschine, wobei die Arbeitsstation insbesondere als Formstation, als Vorheizstation, als Etikettierstation, als Etikettierdruckstation oder als Siegelstation zum Bearbeiten einer Verpackungsfolie konfiguriert ist, wobei die Arbeitsstation eine Folientransportebene definiert, in der die Verpackungsfolie transportierbar ist, und wobei die Arbeitsstation eine elektrisch betreibbare Heizungsanordnung aufweist. Die Heizungsanordnung der Arbeitsstation umfasst ein elektrisch leitfähiges, flächiges Widerstands-Heizelement, das in jeder von zwei eine Ebene vorzugsweise parallel zur Folientransportebene aufspannenden Richtungen um einen Faktor von mindestens 100, vorzugsweise mindestens 400, vorzugsweise sogar von mindestens 1000 größere Abmessungen hat als in einer Richtung senkrecht zur Folientransportebene, und dass das Widerstands-Heizelement zwischen einer Heizplatte und einer Klemmplatte angeordnet ist. Das flächige Widerstands-Heizelement bietet den Vorteil, dass die Heizungsanordnung insgesamt in der Höhe vergleichsweise klein baut, gleichzeitig allerdings ein zuverlässiges und - falls gewünscht - homogenes Erwärmen einer Heizfläche ermöglicht. Dabei umfasst der Begriff "Platte" (sowohl hinsichtlich der Heizplatte, als auch hinsichtlich der Klemmplatte) im Rahmen der Erfindung durchaus auch durchbrochene, mit Vertiefungen oder Aussparungen versehene oder insgesamt eher gitterartige Formen. Bezüglich der zwei die Ebene aufspannende Richtungen ist zu beachten, dass die Ebene, auch die Folientransportebene, auch quasi-zweidimensional sein kann, d.h. auch mindestens eine Krümmung in einer oder mehreren Raumrichtungen oder eine Welligkeit aufweisen kann. Beispielsweise ist es im Kontext der Erfindung möglich, dass die Folie an einer gekrümmten Oberfläche einer Heiz- oder Vorheizstation entlang gezogen wird. Die Ebene könnte sogar die konvexe Oberfläche eines Formstempels einer Formstation sein.

Das Anordnen des Widerstands-Heizelements zwischen einer Heizplatte und einer Klemmplatte bietet mehrere Vorteile. Zum einen wird das Heizelement auf diese Weise vor einem Kontakt mit der Verpackungsfolie oder einem zu verpackenden Gut geschützt; und auch umgekehrt wird das Verpackungsgut vor einem Kontakt mit dem Widerstands-Heizelement geschützt. Dies ist insbesondere dann von Vorteil, wenn das Widerstands-Heizelement aus einem nicht vor einen unmittelbaren Lebensmittelkontakt zugelassenen Material gebildet ist oder ein solches Material aufweist. Zum anderen sorgt das Anordnen des Widerstands-Heizelements zwischen Heizplatte und Klemmplatte für eine robuste mechanische Stabilität.

Besonders vorteilhaft ist es, wenn eine thermische Masse oder Wärmekapazität der Heizplatte genauso groß oder zumindest im Wesentlichen (d.h. mit einer Abweichung von maximal 10 % oder maximal 15%, bevorzugt nur maximal 1%) so groß ist wie die thermische Masse oder Wärmekapazität der Klemmplatte. Dies erlaubt es, dass sich Heizplatte und Klemmplatte gleichmäßig erwärmen und beugt auf diese Weise thermischen Spannungen sowie daraus resultierenden Beschädigungen vor.

Zweckmäßig kann es sein, zwischen dem Widerstands-Heizelement und der Heizplatte einerseits und/oder zwischen dem Widerstands-Heizelement und der Klemmplatte andererseits einen elektrisch isolierenden Isolator anzuordnen. Auf diese Weise werden die Heizplatte oder die Klemmplatte elektrisch vom Widerstands-Heizelement entkoppelt. Bereits ein Isolator mit einer Dicke von 0,05 mm bis 1 mm, beispielsweise in Form einer Platte, kann unter Umständen für eine sichere elektrische Isolierung ausreichen, während sie gleichzeitig den Wärmetransport vom Heizelement zur Heizplatte oder Klemmplatte möglichst wenig beeinträchtigt. Der Isolator kann als Träger für das Widerstands-Heizelement dienen.

In verschiedenen Ausführungsbeispielen ist es möglich, dass die Dicke der Heizungsanordnung von einer Oberkante der Klemmplatte zur einer Unterkante der Heizplatte lediglich nur 6 bis 26 mm, vorzugsweise 15 mm bis 25 mm beträgt. Dies ist erheblich weniger als herkömmliche Heizungsanordnungen, die oft eine Dicke von 40 mm oder mehr hatten.

Je nach Einsatzzweck und Konfiguration der Arbeitsstation ist es denkbar, dass das Widerstands-Heizelement eine Fläche von 5.000 mm² bis 1.500.000 mm² aufweist. Beispielsweise kann das Widerstands-Heizelement oder auch die Heizungsanordnung insgesamt eine Ausdehnung von 400*400 mm aufweisen, auch bis zu insgesamt 1600*800 mm.

Das Widerstands-Heizelement kann auf einen Träger aufgetragen sein. Dies erhöht die Stabilität der Heizungsanordnung. Als Material für den Träger kommen beispielsweise Kunstglimmer (Mikanit) oder PEEK in Frage. Bei dem Träger kann es sich um den vorstehend genannten Isolator handeln.

Wenn zwei oder mehr Träger vorgesehen sind, kann zweckmäßig in einem Zwischenraum zwischen zwei Trägern ein Abstandshalter angeordnet sein, ggf. in Form eines weiteren elektrischen Isolators, um zwei Heizelemente elektrisch voneinander zu trennen und bei Bedarf oder Ausfall eines Heizelements ggf. unabhängig voneinander betreiben zu können.

Das Heizelement kann in jeder denkbaren Ausführungsform der Erfindung z.B. eine rechteckige oder quadratische Außenkontur aufweisen. Alternativ ist auch eine kreisförmige oder elliptische Außenkontur denkbar.

In einer anderen Ausführungsform der Erfindung weist das Widerstands-Heizelement einen mit mäanderförmigem Verlauf in einer Ebene angeordneten elektrischen Flachleiter auf. Dies hat den Vorteil, in der Höhe besonders klein zu bauen und somit eine kompakte Heizungsanordnung zur Verfügung zu stellen, die entsprechend gut handhabbar ist, beispielsweise bei einem Austausch der Heizungsanordnung.

Als Flachleiter kommen insbesondere solche Materialien mit einem spezifischen Widerstand von wenigstens 0,45 Ω*mm²/m in Frage, vorzugsweise von wenigstens 0,7 Ω*mm²/m.

Das Material des Flachleiters kann beispielsweise Edelstahl, eine Chrom-Nickel-Legierung, Konstantan oder Graphit aufweisen. Andere Materialien mit vergleichbaren mechanischen und elektrischen Eigenschaften sind ebenfalls denkbar.

Vorzugsweise hat der Flachleiter eine Stärke (Dicke) im Bereich von ca. 25 µm bis 75 µm.

Zweckmäßig ist es, wenn der Flachleiter zwischen zwei elektrisch isolierenden Isolationsschichten (Trägern) angeordnet ist. Wie bereits vorstehend ausgeführt, kann dies den Flachleiter mechanisch stabilisieren, die Heizplatte und die Klemmplatte elektrisch vom Flachleiter isolieren und gleichzeitig jeden Kontakt zwischen einem Verpackungsgut und dem Flachleiter verhindern.

Als Material für eine solche Isolationsschicht bzw. Träger kommen beispielsweise Kunstglimmer (Mikanit) oder PEEK in Frage. Der Flachleiter kann beispielsweise als Schicht (z.B. aus Edelstahl oder anderem leitfähigen Metall) auf die Isolationsschicht/ den Träger aufgetragen und durch Fräsen konturiert werden. Wenn der Flachleiter zwischen zwei elektrisch isolierenden Trägern angeordnet ist, kann z.B. einer der beiden Träger Stege aufweisen, die zwischen den Bahnen des Flachleiters zum Liegen kommen und die Bahnen elektrisch voneinander isolieren, um Kurzschlüsse und Überschläge zwischen benachbarten Leiterbahnen zu verhindern.

Die Heizungsanordnung kann dazu konfiguriert sein, über ihre Fläche eine (möglichst) homogene Wärmeverteilung zu erzeugen, oder aber gezielt eine inhomogene Wärmeverteilung zu erzeugen, bei der z.B. in einem Randbereich der Heizungsanordnung pro Flächeneinheit eine höhere Heizleistung bereitgestellt wird als in einem mittigen Bereich der Heizungsanordnung.

In einer Variante kann in Randbereichen des Widerstands-Heizelements pro Flächeneinheit eine längere Strecke des Flachleiters vorgesehen sein als in zentralen Bereichen des Widerstands-Heizelements. Dies erlaubt es, in den Randbereichen mehr Wärme zu entwickeln, beispielsweise zum Ausgleich von Wärmeverlusten am Rand des Heizelements, oder aber zum gezielten Erhöhen der Heizleistung in einem Randbereich der Heizungsanordnung. Eine Möglichkeit hierfür bietet sich in einem "hufeisenförmigen" Verlauf des Flachleiters am Rand. Zusätzlich oder alternativ kann das Widerstands-Heizelement, beispielsweise ein Flachleiter, in dem Randbereich der Heizungsanordnung einen geringeren Querschnitt aufweisen als in einem mittigen Bereich der Heizungsanordnung, da ein kleinerer Querschnitt einen höheren elektrischen Widerstand und damit eine lokal erhöhte Wärmeleistung bedeutet.

Allgemein: Bevorzugt kann der Flachleiter demnach über seinen Verlauf einen variierenden Querschnitt aufweisen.

Vorzugsweise ist mindestens eine Maßnahme getroffen, um an einem Ende des Flachleiters eine übermäßige Wärmegenerierung zu vermeiden. Eine mögliche Maßnahme besteht darin, dass ein Endabschnitt des Flachleiters einen größeren Querschnitt (und damit lokal einen geringeren Widerstand) aufweist als ein zentraler Abschnitt des Flachleiters. Eine alternative oder zusätzliche Maßnahme besteht darin, dass ein den Flachleiter kontaktierendes Kontaktstück (z.B. Winkel) einen größeren Querschnitt oder einen Wärmeleitungskoeffizienten als der Flachleiter aufweist, um an der Kontaktstelle weniger Wärme zu generieren oder schneller Wärme abführen zu können, damit es dort nicht zu einer Überhitzung kommt. Ein solcher Anschlusswinkel bzw. ein solches Kontaktstück - mit einer Dicke von beispielsweise 0,1mm bis 0,8mm - kann an einen Endbereich des Flachleiters angeschweißt sein.

In einer Weiterbildung der Erfindung kann zwischen der Heizplatte und dem Heizelement eine Zwischenplatte angeordnet sein, wobei die Heizplatte auf Ihrer dem Heizelement zugewandten Oberfläche wenigstens einen (Vakuum-)Kanal aufweist, der an Vakuumöffnungen angeschlossen und von der Zwischenplatte abgedeckt ist, wobei die Zwischenplatte vorzugsweise dasselbe Material aufweist wie die Heizplatte. Eine solche Ausführungsform ist vorteilhaft, wenn die Verpackungsfolie an die Heizplatte durch Anlegen von Vakuum an der Heizplatte angesaugt werden soll, um erwärmt zu werden. Im Vergleich zu herkömmlich verwendeten Heizplatten, in denen Vakuumleitungen durch Bohren hergestellt wurden und die somit eine erhebliche Mindeststärke benötigen, bietet diese Weiterbildung der Erfindung die Vorteile einer leichteren Herstellbarkeit und einer Möglichkeit zum Reduzieren der Dicke der Heizplatte.

Denkbar ist es ferner, an einer dem Heizelement zugewandten Oberfläche der Heizplatte einen Temperatursensor anzuordnen. Diese Anordnung hat den Vorteil eines mechanischen Schutzes des Temperatursensors durch die Heizplatte sowie einer sehr präzisen Messung der Temperatur unmittelbar am Heizelement.

Der Isolator kann plattenförmig sein und eine Stärke im Bereich von 0,1 mm - 2 mm haben, vorzugsweise 0,4 mm - 1 mm. Er bietet den Vorteil, die Gefahr eines elektrischen Überschlags insbesondere unter Vakuum-Bedingungen zu minimieren. Als Material für den Isolator haben sich mineralische, keramische oder Hochtemperatur-Kunststoffe sowie (Kunst-)Glimmer (*"Mikanit"*) als vorteilhaft erwiesen.

Der elektrische Flachleiter des Heizelements kann eine Stärke im Bereich von 10 µm - 70 µm haben und/oder eine Breite (einer einzelnen Leiterbahn des Flachleiters) im Bereich von 1,5 mm - 30 mm.

Alle elektrischen und thermischen Isolatoren sollten vorzugsweise hitzebeständig sein bis mindestens 250°C, vorzugsweise bis 300°C oder höher.

Die Heizplatte der Heizungsanordnung kann eine Stärke von beispielsweise 4 mm - 25 mm aufweisen.

Bei einem mäanderförmig verlaufenden Flachleiter ist es denkbar, dass das Verhältnis der Heizfläche (d.h. der in Draufsicht vom Flachleiter eingenommenen Fläche) zur gesamten Heizplattenfläche im Bereich von 0,1 - 0,9 liegt, d.h. dass 10% - 90% der Heizplattenfläche von der Bahn des elektrischen Flachleiters bedeckt sind, vorzugsweise 30% - 70%.

In einem Randbereich der Heizschicht, die beispielsweise zwischen 15 mm und 75 mm liegt, kann optional eine Leistungsüberhöhung mit einem Faktor von 1,1 bis 2 im Vergleich zur Wärmeleistung pro Fläche in einem sich an den Randbereich anschließenden, *"inneren"* Heizbereich eingerichtet sein, Dies hat den Vorteil, dass die Heizleistung in den Randbereichen besonders hoch wird und dort Wärmeverluste ausgeglichen werden können, so dass insgesamt eine besonders gleichmäßige Wärmeverteilung erzielt wird.

Eine Möglichkeit zum Erzielen einer solchen Leistungsüberhöhung im Randbereich besteht darin, die Leiterbahnbreite des elektrischen Flachleiters im Randbereich um einen Anteil von 10% - 50% zu reduzieren gegenüber einer Leiterbahnbreite im mittleren Bereich der Heizplattenfläche.

Eine Temperaturmessung kann an der Heizungsanordnung dadurch erfolgen, dass der Widerstand des elektrischen Flachleiters gemessen und ggf. anhand material- und dimensionsabhängiger Konstanten in eine Temperatur umgerechnet wird.

Die Erfindung bezieht sich auf ein Verfahren zum Herstellen eines elektrischen Heizelements für eine Arbeitsstation nach einer der vorstehend geschilderten Ausführungsformen. Bei diesem Verfahren wird zunächst das Material des Flachleiters als Schicht auf einen vorzugsweise elektrisch isolierenden Träger aufgetragen, beispielsweise durch Aufkleben einer solchen Schicht auf den Träger. Das Material der aufgetragenen Schicht wird durch Fräsen oder Einschneiden (beispielsweise mittels eines mechanischen Messers oder eines Lasers) zu einem mäanderförmigen Flachleiter konturiert. Schließlich werden Bereiche der elektrisch leitfähigen Schicht zwischen den Bahnen des Flachleiters abgezogen, so dass am Ende der elektrische Flachleiter als auf den Träger aufgebrachte Bahn übrig bleibt. Dieses Herstellungsverfahren hat den Vorteil, dass zum Einen die Schicht erheblich besser handhabbar ist als ein bereits zu einer dünnen Bahn geschnittener Flachleiter. Zum Anderen sorgt das Konturieren der Flachleiterbahn erst auf dem Träger dafür, dass der Verlauf des Flachleiters präzise vorbestimmt werden kann.

Als Material für die Schicht des Flachleiters kommen beispielsweise Edelstahl oder ein anderes leitfähiges Metall in Frage.

Die Offenbarung bezieht sich auch auf eine Verpackungsmaschine mit einer Arbeitsstation nach einer der vorrangehend geschilderten Ausführungsformen. Eine solche folienverarbeitende Verpackungsmaschine kann beispielsweise als Schalenversiegelungsmaschine (Traysealer), als Kammermaschine (einschl. Kammerbandmaschinen) oder als Tiefziehverpackungsmaschine konfiguriert sein.

Die Offenbarung bezieht sich auch auf ein Verfahren zum Betrieb einer Arbeitsstation einer folienverarbeitenden Verpackungsmaschine nach einer der eingangs geschilderten Ausführungsformen. Bei diesem Verfahren wird die Heizplatte der Arbeitsstation intermittierend mit der Verpackungsfolie in Kontakt gebracht. Das Verfahren zeichnet dadurch aus, dass zumindest über ein definiertes Zeitintervall das Heizelement vor jedem Kontakt zwischen der Heizplatte und der Verpackungsfolie mit einem Stromimpuls zum Erhöhen der Temperatur der Heizplatte versorgt wird. Dies hat erhebliche Vorteile gegenüber einem herkömmlichen, im Betrieb der Arbeitsstation kontinuierlichen Versorgen eines Heizelements mit Strom. Denn die Erfindung ermöglicht eine geringere mittlere Temperatur als herkömmliche Verfahren und somit das Einsparen von Energie.

In einer Weiterbildung ist es denkbar, dass die Temperatur der Heizplatte während eines Kontakts zwischen der Heizplatte und der Verpackungsfolie zumindest zeitweise konstant gehalten wird. Dies kann dazu dienen, eine vorgegebene Qualität der Siegelnaht zu gewährleisten.

Die Heizungsanordnung kann mit einer Spannung von über 300V, vorzugsweise von bis zu 500V betreibbar sein. Eine Strombegrenzung kann vorgesehen und dazu konfiguriert sein, den maximalen Strom auf z.B. 15A oder 20A zu begrenzen.

Die Erfindung wird nachfolgend anhand von Ausführungsbeispielen näher erläutert. Im Einzelnen zeigen:
- Fig. 1: ein erstes Ausführungsbeispiel einer Verpackungsmaschine in Form eines Traysealers,
- Fig. 2: ein zweites Ausführungsbeispiel einer Verpackungsmaschine in Form einer Tiefziehverpackungsmaschine,
- Fig. 3: einen Vertikalschnitt durch ein Ausführungsbeispiel einer Heizungsanordnung,
- Fig. 4: eine Draufsicht auf ein Ausführungsbeispiel einer Heizungsanordnung,
- Fig. 5: eine perspektivische Ansicht eines Ausführungsbeispiels einer Heizungsanordnung,
- Fig. 6: eine Draufsicht auf einen Flachleiter aus dem Ausführungsbeispiel nach Figur 9,
- Fig. 7: ein Temperatur-Zeit-Diagramm,
- Fig. 8: ein weiteres Temperatur-Zeit-Diagramm,
- Fig. 9: einen Vertikalschnitt durch ein Ausführungsbeispiel der Heizungsanordnung mit einem Flachleiter,
- Fig. 10: einen Endbereich des Flachleiters, und
- Fig. 11: einen weiteren Ausschnitt eines Ausführungsbeispiels der Heizungsanordnung mit einem Flachleiter,
- Fig. 12: eine perspektivische Ansicht eines weiteren Ausführungsbeispiels eines Flachleiters,
- Fig. 13: einen Vertikalschnitt durch ein weiteres Ausführungsbeispiel der Heizungsanordnung mit einem Flachleiter, und
- Fig. 14: eine perspektivische Ansicht eines Ausschnitts der Heizungsanordnung.

Gleiche Komponenten sind in den Figuren durchgängig mit gleichen oder einander entsprechenden Bezugszeichen versehen.

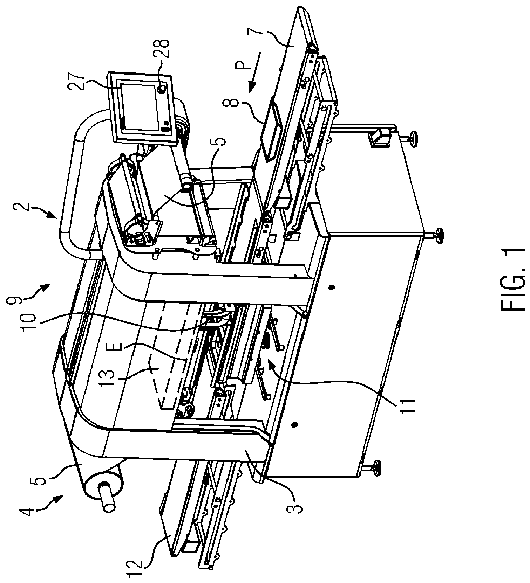

Fig. 1 zeigt ein erstes Ausführungsbeispiel einer Verpackungsmaschine 2, bei der es sich im vorliegenden Ausführungsbeispiel um eine Schalenverschließmaschine (Traysealer) handelt. Die Verpackungsmaschine 2 umfasst ein Gestell 3, das eine Vorratsrolle 4 einer Verpackungsfolie bzw. Deckelfolie 5 tragen kann. Die Verpackungsmaschine 2 weist ferner ein Zuführband 7 auf, mittels dessen befüllte aber zu diesem Zeitpunkt noch unverschlossene Schalen 8 einer Verschließstation 9 als Arbeitsstation der Verpackungsmaschine 2 zugeführt werden können. Die Schalen 8 können mittels einer Greifereinrichtung 10 in einer Produktionsrichtung P in die Verschließstation 9 umgesetzt werden und dort mit der von oben zugeführten Deckelfolie 5 (Folie) verschlossen werden, beispielsweise durch Ansiegeln der Deckelfolie 5 an die Schalen 8. Zu diesem Zweck kann die Verschließstation 9 ein Siegelwerkzeug 11 umfassen. Die versiegelten und damit fertiggestellten Verpackungen können über die Greifereinrichtung 10 aus der Verschließstation 9 auf ein Abführband 12 umgesetzt werden. Die Arbeitsstation (Verschließstation) 9 verfügt über eine Heizungsanordnung 13 zum Erwärmen oder Versiegeln der Verpackungsfolie 5. An der Verpackungsmaschine 2 ist ein Display 27 angeordnet. Es verfügt über Bedienelemente 28.

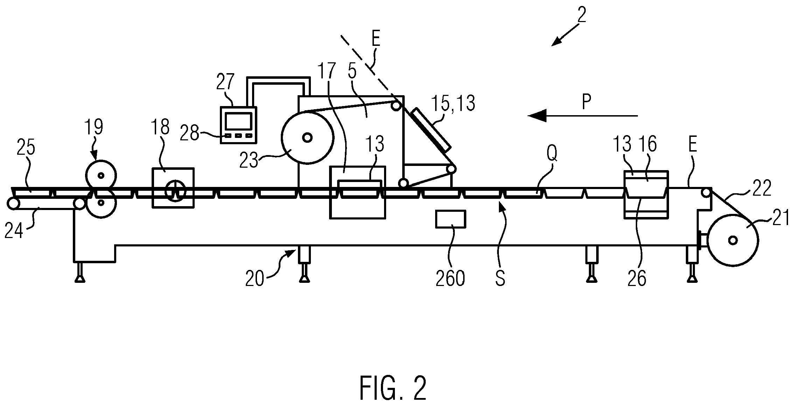

Fig. 2 zeigt ein zweites Ausführungsbeispiel einer Verpackungsmaschine 2 in Form einer Tiefziehverpackungsmaschine. Die Tiefziehverpackungsmaschine 2 weist eine Formstation 16, eine Siegelstation 17, eine Querschneideeinrichtung in Form einer Folienstanze 18 und eine Längsschneideeinrichtung 19 auf, die in dieser Reihenfolge in einer Produktionsrichtung R an einem Maschinenrahmen 20 angeordnet sind. Eingangsseitig befindet sich an dem Maschinenrahmen 20 eine Zufuhrrolle 21, von der eine Verpackungsfolie bzw. Folienbahn 22 abgezogen wird. Im Bereich der Siegelstation 17 ist ein Materialspeicher 23 vorgesehen, von dem eine weitere Verpackungsfolie (Deckelfolie) 5 abgezogen wird. Aus einer optionalen Arbeitsstation in Form einer Vorheizstation 15 kann die Deckelfolie vorgeheizt werden, bevor sie der Siegelstation 17 zugeführt wird. Ausgangsseitig ist an der Tiefziehverpackungsmaschine 2 eine Abfuhreinrichtung 24 in Form eines Transportbandes vorgesehen, mit der fertige, vereinzelte Verpackungen 25 abtransportiert werden. Ferner weist die Tiefziehverpackungsmaschine 2 eine Vorschubeinrichtung auf, die die Folienbahn 22 ergreift und diese intermittierend pro Hauptarbeitstakt in der Produktionsrichtung P weitertransportiert. Die Vorschubeinrichtung kann zum Beispiel durch beidseitig angeordnete Klammerketten ausgeführt sein.

In der dargestellten Ausführungsform ist die Formstation 16 als eine Tiefziehstation ausgebildet, bei der in die Folienbahn 22 durch Tiefziehen Mulden 26 geformt werden. Dabei kann die Formstation 16 derart ausgebildet sein, dass in der Richtung senkrecht zur Produktionsrichtung R mehrere Mulden 26 nebeneinander gebildet werden. In Produktionsrichtung P hinter der Formstation 16 ist eine Einlegestrecke S vorgesehen, in der die in der Folienbahn 16 geformten Mulden 26 mittels eines zusätzlich zur Verpackungsmaschine 2 vorgesehenen Befüllers 14 mit Produkten Q befüllt werden.

Die Querschneideeinrichtung 18 ist als Folienstanze ausgebildet, die die Folienbahn 22 und die Deckelfolie 5 in einer Richtung quer zur Produktionsrichtung P zwischen benachbarten Mulden 26 durchtrennt. Dabei arbeitet die Folienstanze 18 derart, dass die Folienbahn 22 nicht über die gesamte Breite aufgetrennt wird, sondern zumindest in einem Randbereich nicht durchtrennt wird. Dies ermöglicht einen kontrollierten Weitertransport durch die Vorschubeinrichtung.

Die Längsschneideeinrichtung 19 ist in der dargestellten Ausführungsform als eine Messeranordnung mit mehreren rotierenden Rundmessern ausgebildet, mit der die Folienbahn 22 und die Deckelfolie 5 zwischen benachbarten Mulden 26 und am seitlichen Rand der Folienbahn 22 durchtrennt werden, so dass hinter der Längsschneideeinrichtung 19 vereinzelte Verpackungen 25 vorliegen.

Die Tiefziehverpackungsmaschine 2 verfügt ferner über eine Steuerung 260. Sie hat die Aufgabe, die in der Tiefziehverpackungsmaschine 2 ablaufenden Prozesse zu steuern und zu überwachen. Ein hier an der Tiefziehverpackungsmaschine 2 angeordnetes Display 27 mit Bedienelementen 28 dient zum Visualisieren bzw. Beeinflussen der Prozessabläufe in der Tiefziehverpackungsmaschine 2 für bzw. durch einen Bediener.

Jede der Arbeitsstationen 16 und 17, d.h. die Formstation 16 und die Siegelstation 17, ebenso die optional vorgesehen Vorheizstation 15, verfügt über eine Heizungsanordnung 13 zum Erwärmen der jeweiligen Verpackungsfolie 5, 22. Außerdem definiert jede der Arbeitsstationen 9, 15, 16, 17 eine Folientransportebene E, in der die Verpackungsfolie 5, 22 sich in der jeweiligen Arbeitsstation 9, 15, 16, 17 befindet, s. dazu Figuren 1 und 2.

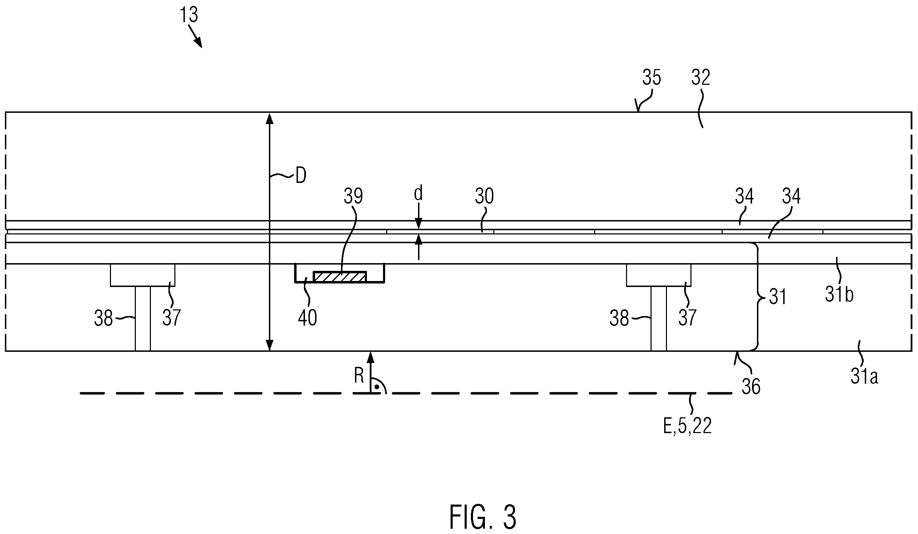

Figur 3 zeigt einen Horizontalschnitt durch ein Ausführungsbeispiel einer Heizungsanordnung 13 in einer erfindungsgemäßen Arbeitsstation 9, 15, 16, 17. Schematisch ist dabei die Folientransportebene E angedeutet, in der sich die jeweilige Verpackungsfolie 5, 22 befindet.

Die Heizungsanordnung 13 ist elektrisch betreibbar. Sie verfügt als zentrales Element über ein elektrisch leitfähiges, flächiges Widerstands-Heizelement 30, das in einer Ebene E` angeordnet ist, die parallel oder im Wesentlichen parallel zur Folientransportebene E liegt. In dieser zur Folientransportebene E parallelen Ebene E` weist das Widerstands-Heizelement in jeder der beiden die Ebene E` aufspannenden Richtungen eine um einen Faktor von mindestens 100, vorzugsweise von mindestens 400 oder sogar von mindestens 1000, größere Abmessung L1, L2 auf als die Dicke oder Abmessung d in einer Richtung R senkrecht zur Folientransportebene E.

Die Heizungsanordnung 13 umfasst ferner auf der der Verpackungsfolie 5, 22 zugewandten Seite eine Heizplatte 31 sowie auf ihrer gegenüberliegenden Seite eine Klemmplatte 32, sodass das Widerstands-Heizelement 30 zwischen der Heizplatte 31 und der Klemmplatte 32 angeordnet ist.

Im vorliegenden Ausführungsbeispiel umfasst die Heizplatte 31 eine äußere Heizplatte 31a sowie eine Zwischenplatte 31b. Die Heizplatte 31 und die Klemmplatte 32 weisen einander zumindest weitgehend entsprechende thermische Massen auf und können zu diesem Zweck beispielsweise aus demselben Material und derselben Stärke angefertigt sein. Dies hat den Vorteil, dass es beim Erwärmen der Heizungsanordnung 13 mittels des Widerstands-Heizelements 30 nicht zu thermischen Spannungen kommt. Zwischen dem Widerstands-Heizelement 30 und der Heizplatte 31 einerseits sowie zwischen dem Widerstands-Heizelement 30 und der Klemmplatte 32 andererseits ist jeweils eine elektrisch isolierende Isolationsschicht bzw. Isolator 34 angeordnet. Die hier plattenförmigen Isolatoren 34 haben jeweils eine Stärke von nur etwa 0,1 mm bis 2 mm, vorzugsweise 0,1mm bis 1mm. Eine Dicke D der gesamten Heizungsanordnung von einer Oberkante 35 der Klemmplatte 32 bis zu einer Unterkante 36 der Heizplatte 31 beträgt in diesem Ausführungsbeispiel nur etwa 8 mm bis 25 mm und somit erheblich weniger als bei herkömmlichen Heizungsanordnungen. Die thermischen Massen von Heizplatte 31 und Klemmplatte 32 können genau gleich zueinander sein. Es kann jedoch genügen, wenn die kleinere thermische Masse bis maximal 10% kleiner ist als die größere thermische Masse der beiden Platten, vorzugsweise bis maximal 5%, noch weiter bevorzugt bis maximal 1%.

Auf einer der Zwischenplatte 31b zugewandten Seite der äußeren Heizplatte 31a verlaufen quer über die Heizungsanordnung 13 Vakuumkanäle 37. Diese können beispielsweise in die Oberfläche der äußeren Heizplatte 31a eingefräst und anschließend durch die Zwischenplatte 31b abgedeckt werden, was in der Herstellung erheblich einfacher ist als das Durchsetzen einer Heizplatte 31 mit Bohrungen. Zwischen den Vakuumkanälen 37 und der Unterkante 36 der Heizplatte 31, d.h. der zur Verpackungsfolie 5, 22 weisenden Oberfläche der Heizplatte 31, verlaufen in beispielsweise regelmäßigen Abständen Vakuumöffnungen 38. Durch Anlegen eines von einer Vakuumquelle (nicht gezeigt) erzeugten Vakuums an den Vakuumkanälen 37 und entsprechend den Vakuumöffnungen 38 kann die Verpackungsfolie 5, 22 an die Oberfläche 36 der Heizplatte 31 angesaugt werden, damit die Folie durch Wärmeleitung vergleichsweise schnell erwärmt werden kann.

Auf der der Zwischenplatte 31b zugewandten Seite der äußeren Heizplatte 31a kann sich ferner optional ein Temperatursensor 39 befinden, beispielsweise in einer zusätzlich zu den Vakuumkanälen 37 vorgesehenen Aussparung 40 in der äußeren Heizplatte 31a, die ebenfalls durch die Zwischenplatte 31b abgedeckt ist. Günstig kann es sein, wenn der Temperatursensor 39 etwa mittig in der Heizungsanordnung 13 angeordnet ist.

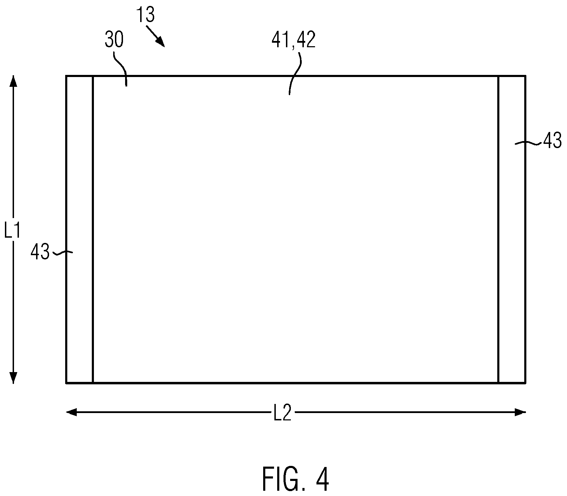

Figur 4 zeigt eine Draufsicht auf ein Ausführungsbeispiel eines elektrisch leitfähigen Widerstands-Heizelements 30 für die Heizungsanordnung 13, das zwischen den beiden Isolatoren 34 angeordnet sein kann. Das Widerstands-Heizelement 30 kann eine Fläche von beispielsweise 5.000 mm² bis 1.000.000 mm² aufweisen. Im vorliegenden Ausführungsbeispiel hat das Widerstands-Heizelement 30 eine rechteckförmige Außenkontur mit Außenabmessungen L2, L2 parallel zur Folientransportebene E, wobei L1 und L2 jeweils um einen Faktor von mindestens 5, vorzugsweise von mindestens 10 größer sind als die Dicke d des Widerstands-Heizelements 30 in einer Richtung senkrecht zur Folientransportebene E.

Auf zwei in Draufsicht einander gegenüberliegenden Seiten des Widerstands-Heizelements 30 ist jeweils ein Kontaktierungsstreifen 43 vorgesehen.

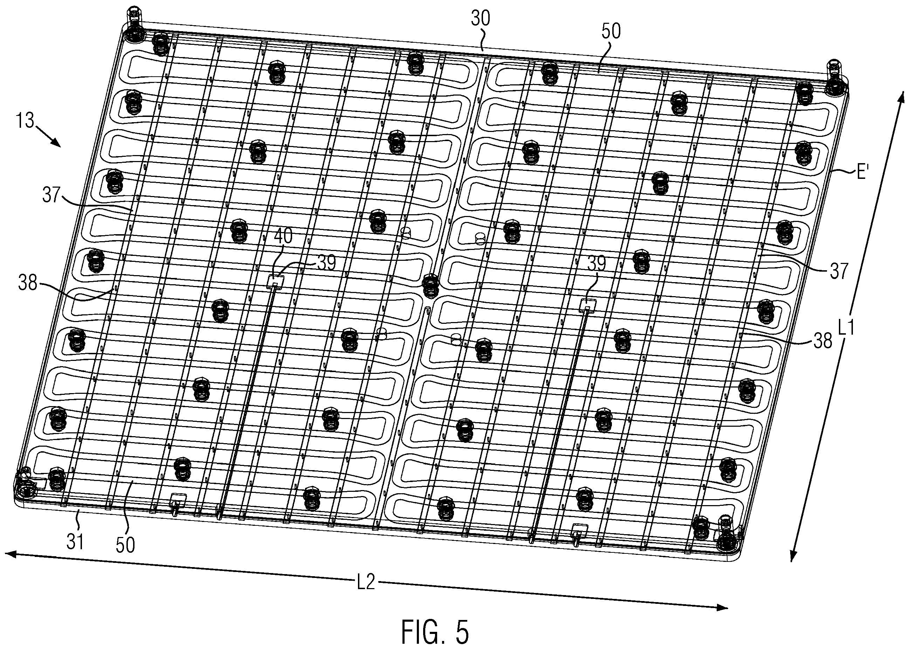

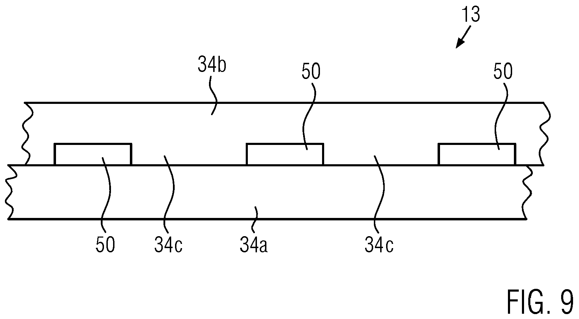

Figur 5 zeigt ein Ausführungsbeispiel eines Widerstands-Heizelements 30 zum Einsatz in einer erfindungsgemäßen Arbeitsstation 9, 15, 16, 17 oder Verpackungsmaschine 2. In diesem Ausführungsbeispiel weist das Widerstands-Heizelement 30 einen in der Ebene E' liegenden elektrischen Flachleiter 50 mit einem mäanderförmigen Verlauf auf. Im vorliegenden Ausführungsbeispiel sind sogar (optional) zwei solcher elektrischen Flachleiter 50 vorgesehen, die jeweils etwa die Hälfte der Fläche der Heizungsanordnung 13 einnehmen. Zu sehen sind in Figuren 9 auch die Vakuumkanäle 37 und die Vakuumöffnungen 38 in der Heizplatte 31, ebenso wie zwei Temperatursensoren 39 in jeweiligen Aussparungen 40 in der Heizplatte 31. Die Klemmplatte 32 ist der Übersichtlichkeit halber nicht dargestellt.

Der Flachleiter 50 kann als Material beispielweise Edelstahl oder eine Chrom-Nickel-Legierung aufweisen. Der Flachleiter 50 ist dadurch gekennzeichnet, dass seine Leiterbahndicke deutlich kleiner als die Leiterbahnbreite ist.

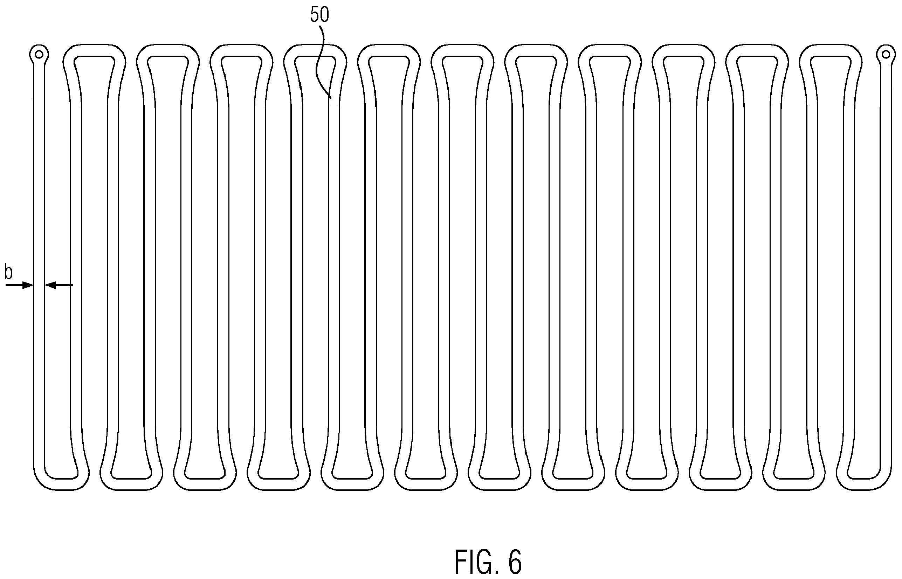

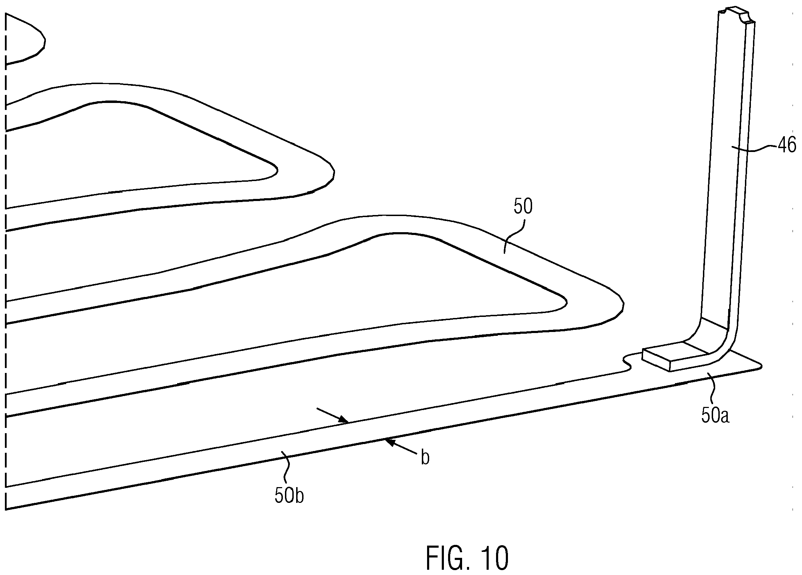

Figur 6 zeigt den elektrischen Flachleiter 50 als solchen. Die Leiterbahnbreite des Flachleiters 50 ist mit b bezeichnet, die Dicke d des Flachleiters 50 ist aus Figur 3 ersichtlich. Figur 10 zeigt, dass der Flachleiter 50 über seinen Verlauf einen variierenden Querschnitt hat. Insbesondere ist ein Querschnitt von Endabschnitten 50a des Flachleiters 50 größer als der Querschnitt von mittigen Abschnitten 50b des Flachleiters 50, um einer Überhitzung an den beiden Endbereichen 50a entgegen zu wirken.

Im Ausführungsbeispiel nach Figuren 5 und 6 wird die vom elektrischen Flachleiter 50 erzeugte Heizleistung in den Randbereichen des Heizelements 30 im Vergleich zu zentralen Bereichen erhöht. Erreicht wird dies, indem in den Randbereichen (in Figur 10: am oberen und unteren Randbereich) pro Flächeneinheit eine längere Strecke des Heizleiters 50 verläuft als in zentralen Bereichen. Im vorliegenden Ausführungsbeispiel wird dies dadurch erreicht, dass der Flachleiter 50 an den Rändern des Heizelements 30 nicht lediglich U-förmig umgebogen ist, sondern hier "hufeisenförmig". Mit der vergrößerten Heizleistung an den Rändern des Heizelements 30 können dort verstärkt auftretende Wärmeverluste zumindest teilweise kompensiert werden.

Im Vergleich zu herkömmlichen Heizungsanordnungen bietet die erfindungsgemäße Heizungsanordnung 13 nicht nur Vorteile hinsichtlich ihrer Kompaktheit, sondern auch hinsichtlich einer insgesamt vergleichsweise geringen Wärmekapazität. Dies wiederum bietet den Vorteil, dass die Heizungsanordnung 13 in der erfindungsgemäßen Arbeitsstation 9, 15, 16, 17 erheblich dynamischer als herkömmliche Heizungsanordnungen betrieben werden kann.

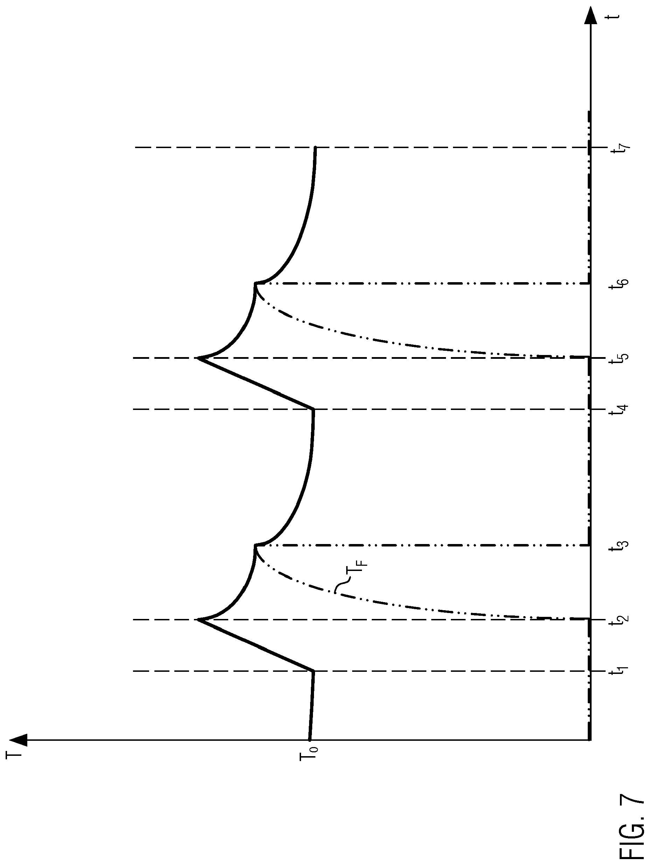

Konkret kann eine Steuerung 260 der Verpackungsmaschine 2 dazu konfiguriert sein, die Heizungsanordnung in einer intermittierend arbeitenden Arbeitsstation 9, 15, 16, 17 so anzusteuern, dass die Heizplatte 31 jeweils genau vor einem Kontakt mit der Verpackungsfolie 5, 22 gezielt aufgeheizt wird, insbesondere durch Anlegen eines entsprechenden Stromimpulses am Widerstands-Heizelement 30. In der Steuerung 260 der Verpackungsmaschine 2 ist durch entsprechende Prozessparameter der Zeitpunkt bekannt, an dem die Verpackungsfolie 5, 22 mit der Heizplatte 31 in Berührung kommen wird. Figur 7 zeigt beispielhaft, wie die Temperatur T der Heizplatte 31 (durchgezogene Linie) und die Temperatur T_{F} der Folie (strichpunktierte Linie) sich im Verlauf der Zeit t verändert. Ausgehend von einem Startwert T₀ der Temperatur T beginnt zum Zeitpunkt t1 das Aufheizen der Heizplatte 31 mittels des Widerstands-Heizelements 30 bis zu einem Zeitpunkt t2 Die Temperatur T_{F} der zum Zeitpunkt t2 mit der Heizplatte 31 in Kontakt kommenden Folie 5, 22 steigt an; gleichzeitig sinkt die Temperatur T der Heizplatte entsprechend exponentiell ab. Zum Zeitpunkt t3 endet der Kontakt zwischen der Verpackungsfolie 5, 22 und der Heizplatte 31. Die Heizplatte 31 kühlt weiter ab, wenn der Stromimpuls zu diesem Zeitpunkt beendet ist bis der Zyklus beim Zeitpunkt t4 erneut beginnt.

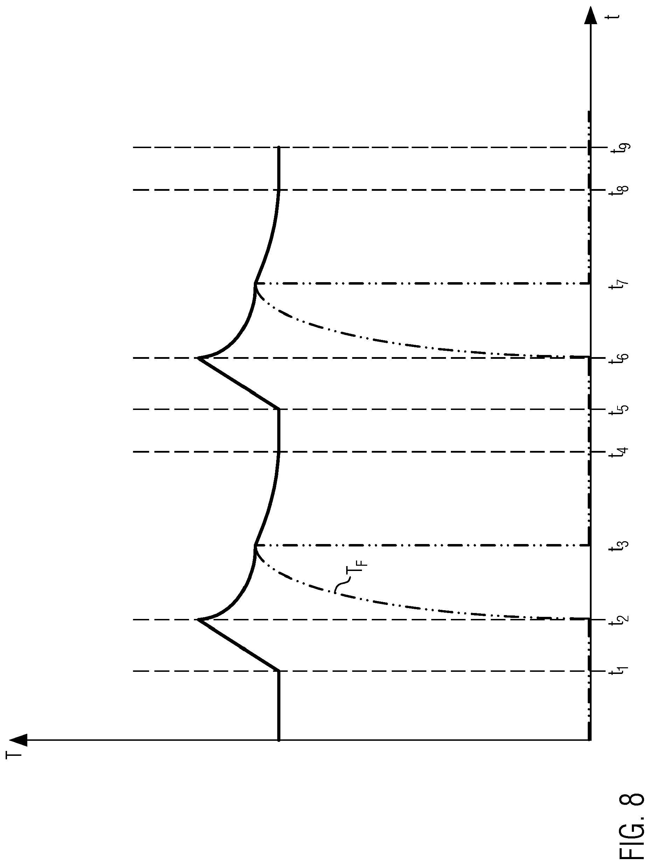

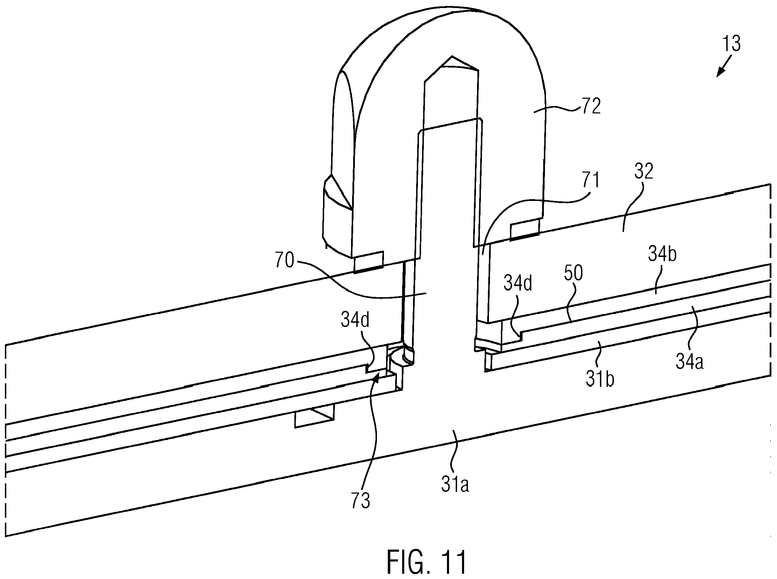

Figur 8 zeigt eine Variante des Temperaturverlaufs T über der Zeit t. Der Unterschied zur Variante nach Figur 11 besteht lediglich darin, dass nach dem Abkühlen der Heizplatte 31 zwischen den Zeitpunkten t4 und t5 die Temperatur der Heizplatte auf einem konstanten Niveau gehalten wird, bis beim Zeitpunkt t5 ein neuer Heizzyklus beginnt. Das Konstanthalten der Temperatur T der Heizplatte erfolgt durch Anlegen eines Stroms am Widerstands-Heizelement, dessen Stromstärke geringer ist als die Stärke des zwischen den Zeitpunkten t1 und t2 bzw. zwischen den Zeitpunkten t5 und t6 angelegten Stromimpulses.

Fig. 9 zeigt einen Vertikalschnitt durch ein Ausführungsbeispiel der Heizungsanordnung 13 mit einem Flachleiter 50. In diesem Ausführungsbeispiel ist der Flachleiter 50 auf einem ersten Träger 34a aufgebracht, beispielweise einem Träger 34a aus Mikanit. Der Flachleiter 50 kann dazu als Schicht aufgelegt oder aufgetragen und durch Fräsen in seine Kontur gebracht worden sein. Ein zweiter isolierender Träger 34b nimmt den Flachleiter 50 zwischen sich und dem ersten Träger 34a auf. Der zweite Träger 34b bildet quasi einen "Deckel" und kann z.B. ebenfalls aus Mikanit gebildet sein. Im dargestellten Ausführungsbeispiel weist der zweite Träger 34b Stege 34c auf, die zwischen den Bahnen des Flachleiters 50 zum Liegen kommen und einen elektrischen Überschlag zwischen den benachbarten Bahnen des Flachleiters 50 verhindern.

Fig. 10 zeigt ein Ausführungsbeispiel eines Endbereichs des Flachleiters 50, in dem der Flachleiter 50 mit einem elektrischen Kontakt 46 verbunden ist, hier einem Winkel-Kontaktstück 46. Zu erkennen ist, dass der Endabschnitt 50a des Flachleiters 50 einen größeren Querschnitt bzw. eine größere Breite b aufweist, als die übrigen, mittigen Abschnitte 50b des Flachleiters 50. Diese Maßnahme sorgt dafür, dass der Endabschnitt 50a einen geringeren elektrischen Widerstand aufweist und somit weniger Wärme generiert als die mittigen Bereiche 50b des Flachleiters 50. Zum selben Zweck ist die Dicke des Kontaktes 46 erheblich größer als die Dicke des Flachleiters 50, um ebenfalls die Erzeugung von Wärme im Endbereich des Flachleiters 50 zu verringern.

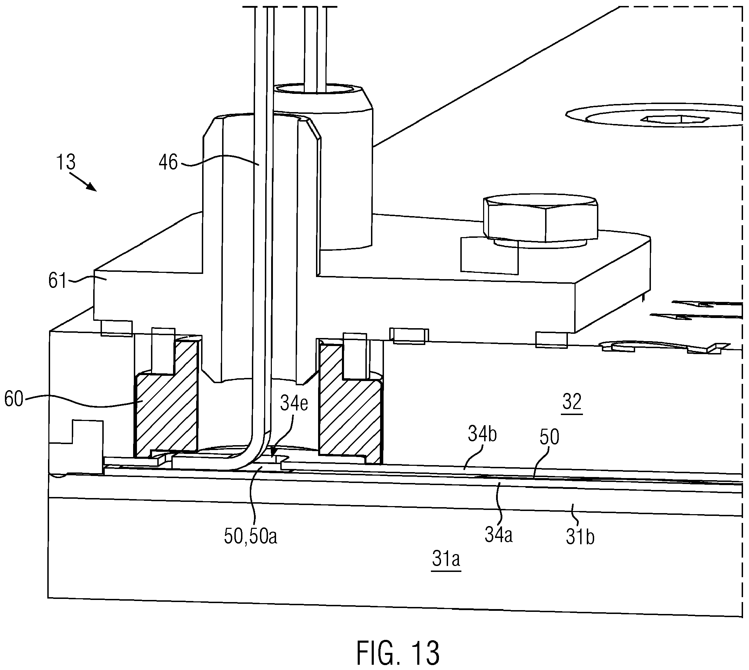

Fig. 11 zeigt einen Ausschnitt eines Ausführungsbeispiels der Heizungsanordnung 13 mit einem Flachleiter 50 als Widerstands-Heizelement 30. Der Flachleiter 50 liegt sandwichartig eingebettet zwischen einem ersten und einem zweiten Träger 34a, 34b, beispielsweise wie in Fig. 13 dargestellt. Zwischen dem ersten Träger 34a und einer äußeren Heizplatte 31a ist eine Zwischenplatte 31b angeordnet, beispielsweise aus Aluminium. Auf der der Heizplatte 31a abgewandten Seite des zweiten Trägers 34b befindet sich eine Klemmplatte 32.

Eine mit der Heizplatte 31a verbundene Verschraubung 70, beispielsweise ein Gewindebolzen 70, durchsetzt eine Öffnung 71 in der Klemmplatte 32, in den Trägern 34a, 34b und der Zwischenplatte 31b. Eine Hutmutter 72 ist auf die Verschraubung 70 aufgesetzt und so fest angezogen, dass sie eine Kraft auf die Klemmplatte 32 ausübt, die wiederum die sandwichartige Struktur der Heizungsanordnung 13 aneinander anpresst. Die Verschraubung 70 kann mit der Heizplatte 31a verschweißt sein.

Zu erkennen ist in Fig. 11 ferner eine elektrische Isolierung 73 der Verschraubung 70 gegenüber dem Flachleiter 50. Im dargestellten Ausführungsbeispiel wird die elektrische Isolierung 73 erreicht durch einen Absatz 34d der beiden Träger 34a, 34b. Mittels des Absatzes 34d wird dafür gesorgt, dass der Bereich des Flachleiters 50 nicht freiliegt zur Öffnung 71, die von der Verschraubung 70 durchsetzt wird. Die elektrische Isolierung 73 verhindert einen elektrischen Überschlag zwischen dem Flachleiter 50 und der Verschraubung 70.

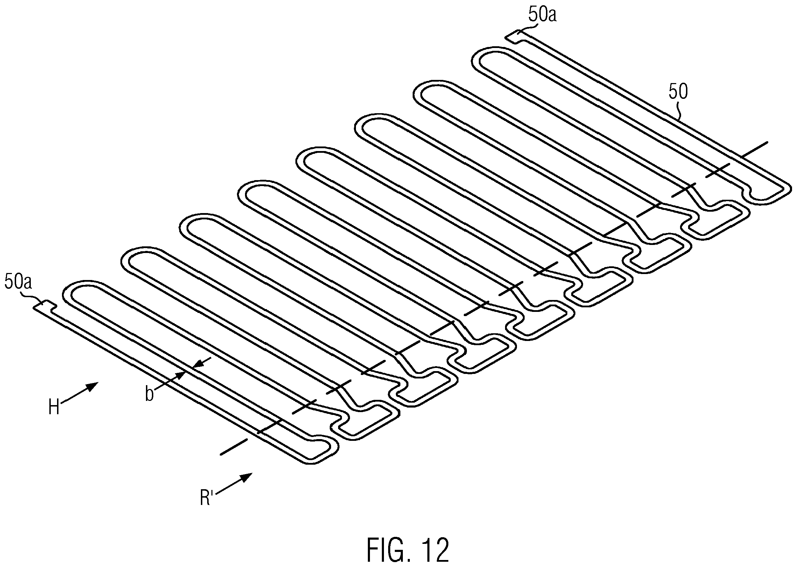

Fig. 12 zeigt in perspektivischer Ansicht ein weiteres Ausführungsbeispiel eines elektrischen Flachleiters 50. Dieser Flachleiter 50 verläuft ebenfalls im Wesentlichen mäanderförmig. Der elektrische Flachleiter 50 kann eine Leiterbahnbreite b von vorzugsweise 2,5 mm bis 30 mm aufweisen, sowie eine Stärke (senkrecht zur Ebene des Flachleiters) im Bereich von 10 µm bis 70 µm. Im Ausführungsbeispiel nach Fig. 12 hat das in Form eines elektrischen Flachleiters 50 realisierte Widerstands-Heizelement 30 einen Hauptbereich H und einen Randbereich R'. Im Hauptbereich H, der den Großteil der Fläche des Widerstands-Heizelements 30 einnimmt, haben die Bahnen des Flachleiters 50 einen U-förmigen Verlauf. Im Randbereich R' hingegen, der eine Breite von beispielsweise 15 mm bis 75 mm haben kann, weicht der Verlauf von einem U-förmigen Verlauf ab. Im Ergebnis wird im Randbereich R' ein größerer Anteil der Fläche des Heizelements 30 vom Flachleiter 50 eingenommen als im Hauptbereich H. Entsprechend größer, nämlich um einen Faktor von beispielsweise 1,1 bis 2,0, ist die pro Flächeninhalt erzeugte Heizleistung im Randbereich R' im Vergleich zur flächenmäßigen Heizleistung im Hauptbereich H. Auf diese Weise kann ein Ausgleich höherer Wärmeverluste am Randbereich R erfolgen.

Fig. 13 zeigt in perspektivischer Ansicht ein in Vertikalrichtung aufgeschnittenes Ausführungsbeispiel einer Heizanordnung 13. Eine äußere Heizplatte 31a, beispielsweise aus Aluminium, dient zur Übertragung von Wärme durch ihre Unterseite auf ein Werkstück, beispielsweise Verpackungsmaterial. Auf der gegenüberliegenden Oberseite der Heizplatte 31a liegt eine Zwischenplatte 31b auf, beispielsweise ebenfalls aus Aluminium. Auf dieser Zwischenplatte 31b wiederum befindet sich ein plattenförmiger Isolator bzw. Träger 34a, beispielsweise aus Mikanit. Auf diesen Isolator oder Träger 34a oder in Kanäle oder Vertiefungen im Isolator/Träger 34a befindet sich das elektrisch leitfähige Flachleiter-Heizelement 50. Ein Anschlusswinkel oder Kontaktstück 46 mit erheblich größerer Materialstärke als der Flachleiter 50 ist an einen Endbereich 50a des elektrischen Flachleiters 50 angeschweißt und auf diese Weise elektrisch mit dem Flachleiter 50 verbunden. Der Anschlusswinkel 46 dient zur elektrischen Kontaktierung des Flachleiters 50.

Auf der der Heizplatte 31a gegenüberliegenden Seite des Flachleiters 50 befindet sich eine Klemmplatte 32. Zwischen der Klemmplatte 32 und dem Flachleiter 50 befindet sich ein zweiter Isolator oder Träger 34b, der wie der erste Isolator 34a plattenförmig ausgebildet ist und ebenfalls aus Mikanit bestehen oder Mikanit aufweisen kann. Der Anschlusswinkel 46 ist durch eine Öffnung 34e im zweiten Isolator 34b hindurchgeführt.

In seinem unteren, dem Flachleiter 50 benachbarten Bereich ist der Anschlusswinkel 46 umgeben von einer elektrisch isolierenden, temperaturbeständigen Buchse 60, beispielsweise aus PEEK. Sie dient u.a. zur elektrischen Isolierung der Klemmplatte 32 vom Anschlusswinkel 46. Auf die Klemmplatte 32 aufgesetzt, mit dieser verschraubt und in die Buchse 60 hineinragend weist die Heizungsanordnung 13 eine Verbindungsbuchse 61 auf. Diese ist elektrisch isolierend, wärmebeständig bis zu Temperaturen von mindestens 250°C oder sogar mindestens 300°C und kann ebenfalls aus PEEK ausgebildet sein. Sie dient neben einer elektrischen Isolation auch zu einer mechanischen Isolierung bzw. für einen mechanischen Schutz des Anschlusswinkels 46.

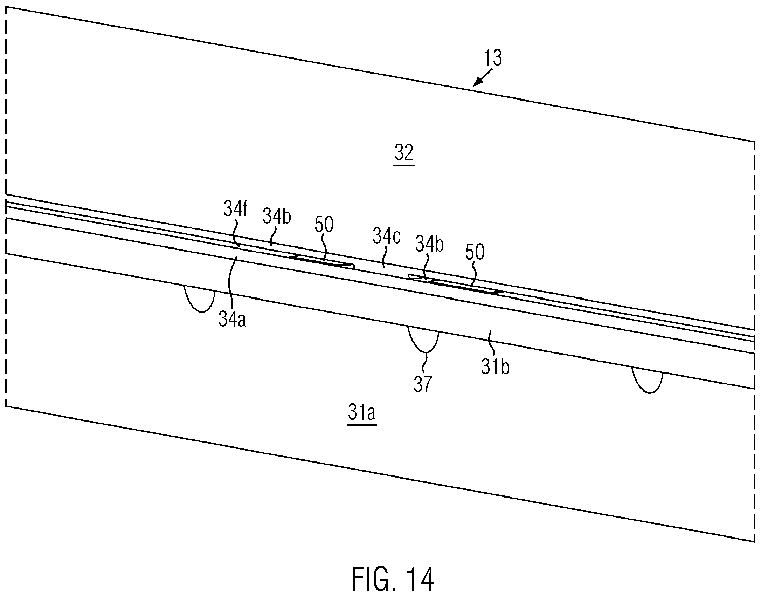

Fig. 14 zeigt in perspektivischer Ansicht einen vergrößerten Ausschnitt einer vertikal aufgeschnittenen Heizungsanordnung 13. Die Bahnen des elektrischen Flachleiters 50 befinden sich auf der Oberseite des ersten Isolators oder Trägers 34a. Sie können hergestellt worden sein, indem eine vollflächige Schicht des Materials des Flachleiters 50 auf die Oberfläche des Trägers 34a aufgebracht worden ist, beispielsweise durch Anhaften. Das Anhaften kann beispielsweise durch Zwischenfügen eines Klebers oder durch das Erzeugen von Haftkräften beim Herstellen des Trägers 34a erzeugt werden. Anschließend wurden die Konturen des späteren Flachleiters 50 aus der Schicht ausgefräst oder ausgestanzt, bevor überschüssige Teile zwischen den Leiterbahnen abgezogen oder anderweitig entfernt wurden.

Der zweite Isolator 34b ist auf der dem ersten Isolator 34a gegenüberliegenden Seite des Flachleiters 50 angeordnet. Er kann aus demselben Material bestehen, beispielsweise Mikanit. Zwischen den einzelnen Leiterbahnen des elektrischen Flachleiters 50 und/oder zwischen verschiedenen Heizkreisen oder Heizbereichen weist der zweite Isolator/Träger 34b Stege 34c auf. Diese Stege 34c dienen dazu, einander benachbarte Leiterbahnen des Flachleiters 50 und/oder verschiedene Heizkreise voneinander in einer Weise zu isolieren, dass auch unter Vakuum-Bedingungen kein elektrischer Überschlag möglich ist. Neben einem Steg 34c befindet sich eine Tasche oder ein "Nest" 34f, in der der elektrische Flachleiter 50 angeordnet ist. Die Tasche bzw. das Nest 34f kann eine Tiefe von etwa 0,05 mm bis 0,5 mm aufweisen und in den plattenförmigen Isolator 34b durch Fräsen eingeformt sein. In der Tasche 34f hat der elektrische Flachleiter 50 genügend Raum, um sich ohne das Erzeugen thermischer Spannungen beim Aufheizen oder Abkühlen verformen zu können. An ihrer dem Heizelement 30 zugewandten Oberfläche weist die äußere Heizplatte 31a wenigstens einen Vakuumkanal 37 auf.

Sowohl im Ausführungsbeispiel nach Fig. 3 als auch im Ausführungsbeispiel nach Fig. 14 kann optional die äußere Heizplatte 31a von den übrigen Komponenten der Heizungsanordnung 13 lösbar sein. Dies bietet die Möglichkeit, die äußere Heizplatte 31a separat von den übrigen Komponenten der Heizungsanordnung 13 zu behandeln, beispielsweise zum Erneuern einer Teflonschicht auf der dem Werkstück zugewandten Oberfläche der Heizplatte 31a.

Ausgehend von den dargestellten Ausführungsbeispielen können die erfindungsgemäße Arbeitsstation und das erfindungsgemäße Verfahren in vielfacher Weise verändert werden. Beispielsweise sind andere Materialien denkbar oder der Verlauf des Flachleiters 50 kann sich unter Umständen erheblich von dem in den Figuren 5,6 oder 12 gezeigten Verlauf unterscheiden, beispielsweise mehr oder weniger Windungen aufweisen.

## Patentansprüche

1. Verfahren zum Herstellen eines elektrischen Heizelements (30) für eine Arbeitsstation (9, 15, 16, 17) einer folienverarbeitenden Verpackungsmaschine (2), wobei ein Flachleiter (50) als Schicht auf einen Träger (34a) aufgetragen wird, vorzugsweise durch Anhaften, und durch Fräsen oder Einschneiden zu einem mäanderförmigen Flachleiter (50) konturiert wird, bevor Bereiche der Schicht zwischen den Bahnen des Flachleiters (50) abgezogen werden.

2. Verfahren nach Anspruch 1, wobei die Schicht des Flachleiters (50) Edelstahl oder ein anderes leitfähiges Metall aufweist.

3. Verfahren nach Anspruch 1 oder 2, wobei die Arbeitsstation (9, 15, 16, 17) insbesondere als Formstation (16), als Vorheizstation (15), als Etikettierstation, als Etikettierdruckstation oder als Siegelstation (17) zum Bearbeiten einer Verpackungsfolie (5, 22) konfiguriert ist, wobei die Arbeitsstation (9,15, 16, 17) eine Folientransportebene (E) definiert, in der die Verpackungsfolie (5, 22) transportierbar ist, und wobei die Arbeitsstation (9, 15, 16 ,17) eine elektrisch betreibbare Heizungsanordnung (13) aufweist,
wobei die Heizungsanordnung (13) das elektrisch leitfähige, flächige Widerstands-Heizelement (30) umfasst, das in jeder von zwei eine Ebene (E`) parallel zur Folientransportebene (E) aufspannenden Richtungen um einen Faktor von mindestens 100 größere Abmessungen (L1, L2) hat als eine Abmessung (d) in einer Richtung (R) senkrecht zur Folientransportebene (E),
wobei das Widerstands-Heizelement (30) zwischen einer Heizplatte (31) und einer Klemmplatte (32) angeordnet ist.

4. Verfahren nach einem der vorangehenden Ansprüche, wobei der Flachleiter (50) durch Anhaften unter Zwischenfügen eines Klebers auf den Träger (34a) aufgetragen wird.

5. Verfahren nach einem der vorangehenden Ansprüche, wobei der Träger (34a) ein elektrischer Isolator ist.

6. Verfahren nach einem der vorangehenden Ansprüche, wobei auf einer dem ersten Träger (34a) gegenüberliegenden Seite des Fachleiters (50) ein zweiter Isolator (34b) angeordnet wird.

7. Verfahren nach den Ansprüchen 5 und 6, wobei der Träger (34a) und der zweite Isolator (34b) aus demselben Material bestehen.

8. Verfahren nach Anspruch 7, wobei der Träger (34a) und der zweite Isolator (34b) aus Mikanit bestehen.

9. Verfahren nach einem der Ansprüche 6 bis 8, wobei der zweite Isolator (34b) Stege (34c) aufweist, wobei die Stege zwischen einzelnen Leiterbahnen des elektrischen Flachleiters (50) und/oder zwischen verschiedenen Heizkreisen angeordnet werden.

10. Verfahren nach Anspruch 9, wobei sich neben einem Steg (34c) eine Tasche (34f) befindet, in der der elektrische Flachleiter (50) angeordnet wird.

11. Verfahren nach Anspruch 10, wobei die Tasche (34f) eine Tiefe von 0,05mm bis 0,5mm aufweist.

12. Verfahren nach einem der Ansprüche 10 oder 11, wobei die Tasche (34f) durch Fräsen in den zweiten Isolator (34b) eingeformt wird.

13. Heizungsanordnung (13) für eine Arbeitsstation (9, 15, 16, 17) für eine folienverarbeitende Verpackungsmaschine (2), wobei die Heizungsanordnung (13) elektrisch betreibbar ist und ein elektrisches Heizelement (30) aufweist, das durch ein Verfahren nach einem der Ansprüche 1 bis 12 hergestellt wurde.
